# EUROPEAN PATENT SPECIFICATION

(11) **EP 0 431 179 B1**
(45) Date of publication and mention of the grant of the patent: **20.04.1994**
(21) Application number: 90908641.5
(22) Date of filing: 06.06.1990
(51) Int. Cl.: B60C 11/16

(54) **Stud unit and skid-proof tire using the same**
Stifteinheit sowie ein mit dieser Einheit ausgerüsteter rutschhemmender Reifen
Clou antidérapant et pneu antidérapant pourvu de ce clou

(30) Priority: 10.06.1989 JP 147184/89
(43) Date of publication of application: 12.06.1991
(73) Proprietor: HOJO, Hiroo, Nagano 380 (JP)
(72) Inventor: HOJO, Hiroo, Nagano 380 (JP)
(74) Representative: Linn, Samuel Jonathan
(86) International application number: PCT/JP90/00740
(87) International publication number: WO 90/14966

(56) References cited:
- EP-A- 0 095 007
- WO-A-88/06538
- JP-A-01 226 408
- JP-A-59 186 704
- JP-B- 4 513 601
- US-A- 3 583 462

## Description

### FIELD OF TECHNOLOGY

The present invention relates to both a stud unit and a skid-proof tire with the stud unit applied which are effective for preventing a car from slipping on an icy or snowy road surface when the car starts or stops.

### BACKGROUND TECHNOLOGY

Conventionally, for the purpose of securing safety in driving a car on an icy or snowy road surface, spike tires have been used which are snow tires with a plurality of spikes (called also studs) applied.

However, when a car equipped with spike tires is driven on a dried road surface on which snow or ice have melted away, the road surface will unfavorably be shaven off. This shaven-off dust is blown up into the atmosphere, causing air pollution. The dust is harmful to the human body since it contains harmful heavy metals such as cadmium and lead. In addition, traffic signs painted on the road, such as at a crossing zone are shaven off by the spike pin, resulting in the danger that such traffic signs are not discernible. Further, a large amount of expenditure needs to be spent once the snow has melted to re-paint traffic signs and repair shaven road surfaces.

On the other hand, for the purpose of reducing the need for spike tires and for preventing possible traffic accidents, calcium chloride, etc. are sprayed to accelerate the snow melting on the road. However, such operations are raising various serious problems of secondary public hazards such as death of trees on the roadside and pollution of water.

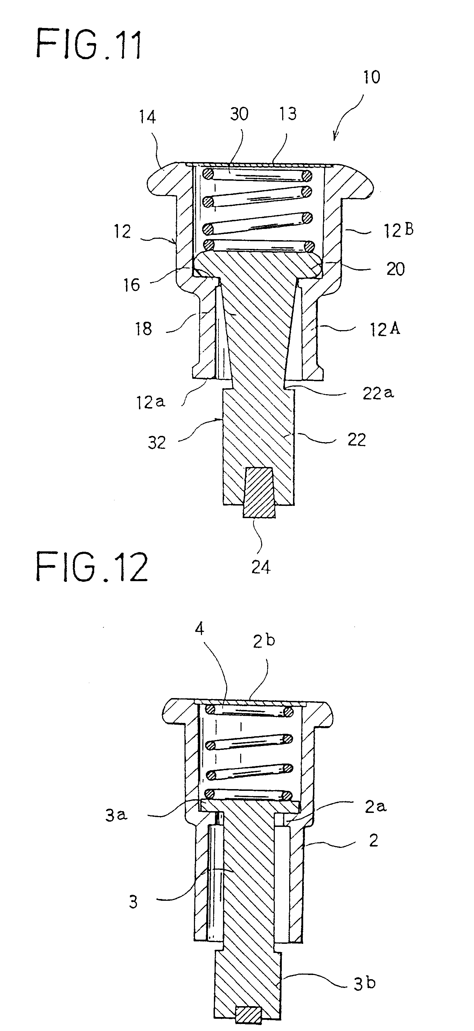

In order to solve the above problems, the present inventor has invented a stud unit shown in FIG. 12 (Japanese Patent Applicatioin No. 63-50467).

In this stud unit, a stud 3 is inserted in a cylinder 2 so that it can move back and forth with play. An enlarged section 3a is formed at the back end of this stud 3, and this enlarged section 3a is retained by a step section 2a provided at an intermediate position of the cylinder 2. A spring 4 is provided between the bottom face 2b of the cylinder 2 and the enlarged section 3a so as to project an enlarged section 3b at the front end of the stud 3 from the front end of the cylinder 2. The enlarged section of the stud 3 is a thin plate disk whose diameter is slightly shorter than the inner diameter of the cylinder 2.

During constant-speed running, the stud 3 does not damage the road surface since it is pushed completely into the cylinder against the elastic force of the spring 4.

On the other hand, slip is easy to occur at the time of braking or acceleration or deceleration, but the use of the stud unit prevents the slip in such a sequence that as the tire rotates, the resistance from the road surface will exert a horizontal force on the studs 3 sequentially coming into contact with the road, and that the stud 3 is moved slantly in the cylinder to bring the enlarged section 3b into engagement of the jaw section thereof with the opening edge of the cylinder for the projected state to be maintained.

However, this tire has the following problems:
(1) When a car, equipped with tires having the above-described stud units applied, is driven, the stud 3 makes a sequence of back and forth movements in every rotation of the tire, with application of a large force on the enlarged section 3a at each movement. This may cause the enlarged section 3a, if thin, to be deformed or damaged.
(2) As a countermeasure for the above problem (1), it is conceivable to make the enlarged section 3 thicker, but the circumferential side face of the enlarged section 3a would be in the way of the swing of the stud 3, thus inhibiting the stud 3 from moving slantly.
(3) It is also conceivable to make the enlarged section 3a of the stud 3 thick and at the same time reduce the enlarged section 3a in diameter, but it is impossible to make the cylinder 2 coincide in axis with the stud 3; they are made easier to get out of coincidence. For this reason, even when a small horizontal force is exerted on the stud unit, the enlarged head section 3b of the stud 3 is easily brought into engagement with the opening edge of the cylinder 2, i.e. into the projected state, where the road surface is likely to be shaven.

### DISCLOSURE OF THE INVENTION

The object of the present invention is to provide both a stud unit which, during normal running, the stud is capable of exact back and forth movement with both the axis of the cylinder and the axis of the stud kept in coincidence with each other, and a skid-proof tire having a plurality of the stud units applied.

The present invention is provided with the following configurations to fulfill the above-stated objects.

Accordingly, the present invention provides a stud unit as defined in the accompanying claim 1.

In another aspect the present invention provides a skid-proof tire as defined in the accompanying claim 8.

The enlarged section of the above-mentioned stud unit may be in section either a trapezoid or a reversed trapezoid, and the side-wall section of the enlarged section may be an arc in section.

The contact faces of the enlarged section of the stud unit and the retaining section may each be made perpendicular to the axis of the cylinder, and the back end of the shaft may be made slightly smaller in diameter than the inner diameter of the through-hole of the retaining section of the cylinder and at the same time reduced in diameter toward the jaw section.

In addition, a skid-proof tire may be prepared by setting each stud unit in a plurality of holes provided on the outer circumferential surface of a tire tread.

### BRIEF DESCRIPTION OF THE DRAWINGS

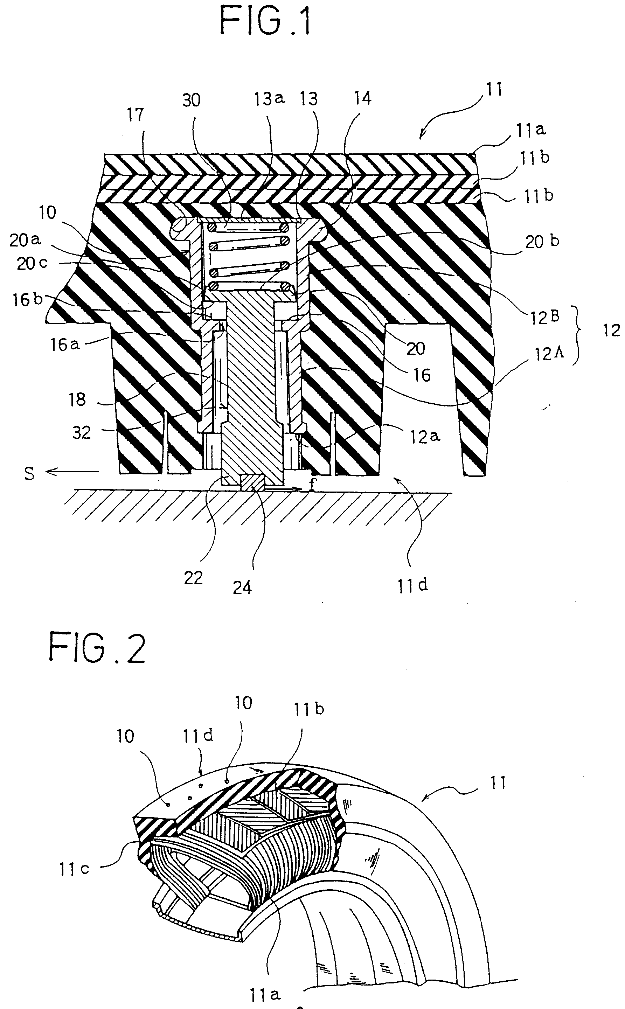

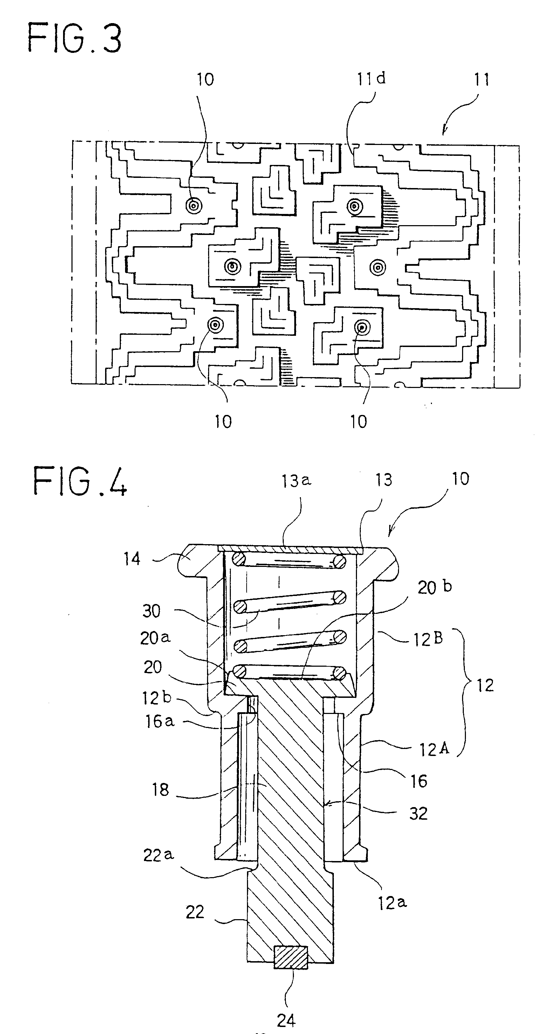

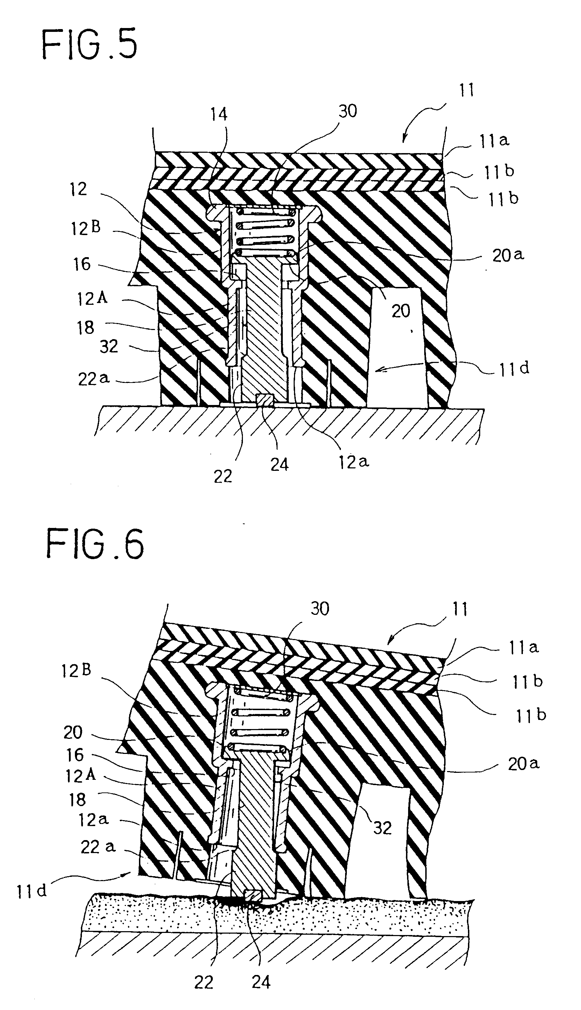

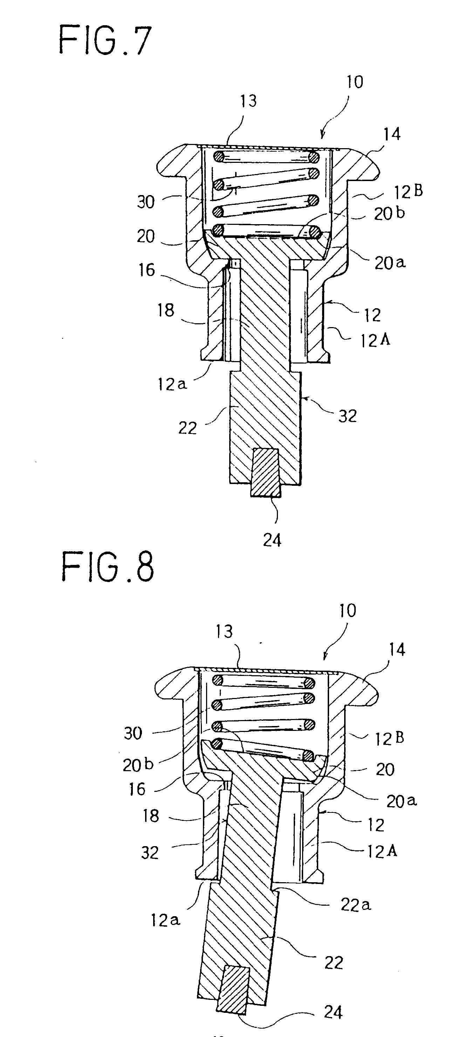

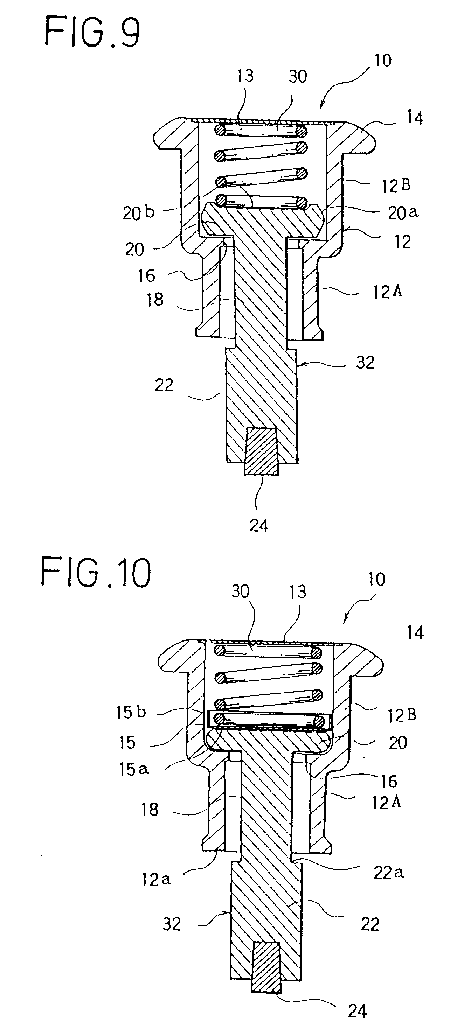

FIG. 1 is a sectional view of part of a skid-proof tire of the present invention; FIG. 2 is a partial sectional view of the tire; FIG. 3 is a plan view of part of a tire illustrating a stud unit applied on a tread face of the tire; FIG. 4 is a longitudinal sectional view of a stud unit; FIG. 5 is a sectional view of a stud unit of a skid-proof tire in contact with road; FIG. 6 is a sectional view of the operation of a stud of a skid-proof tire which is in such a state that a braking has been applied during a running on an icy or snowy road surface; FIG. 7 is a sectional view of another stud unit; FIG. 8 is a sectional view of the stud of the stud unit of FIG. 7 in its slant state; FIGS. 9-11 are sectional views of still other embodiments of stud units; and FIG. 12 is a sectional view of a conventional stud unit.

### EMBODIMENTS

Preferred embodiments of the present invention will be desribed below in detail by reference to the accompanying drawings.

A tire 11, as shown in FIG. 2, consists of a carcass 11a, which is made by putting rubber into a pile of several sheets of nylon warp cloth called cord cloth, of several layers of breakers 11b placed on the carcass 11a, and of a thick rubber layer 11c placed on the layers of breakers 11b which is capable of supporting the weight of car and resisting the shock and friction caused by rapid wheel rotation from road surface. On the rubber layer 11c is placed a tread section 11d having a pattern formed.

Stud units 10 are each inserted in a number of holes 17 bored at suitable positions throughout the surface of the tread section 11d of the tire 11 (see FIG. 1).

The stud unit will be described below by reference to FIG. 4.

A cylinder 12 forming the stud unit 10 has a flange section 14 formed at the back end thereof. The cylinder 12 is divided into a small-diameter cylinder section 12A on the front end side thereof and a large-diameter cylinder section 12B on the back end side thereof.

A step 12b is formed on the outer circumferential surface at the boundary section between the small-diameter cylinder section 12A and the large-diameter cylinder section 12B. On the other hand, on the inner circumferential surface at the boundary section there is projected an inner flange, i.e., a retaining section 16, equipped with a through-hole 16a.

A shaft 18 is inserted in the cylinder 12 with play. The shaft 18 is provided, at the back end thereof, with an enlarged section 20 which is contained in the large-diameter cylinder section 12B of the cylinder 12, the shaft 18 penetrates, with the middle section thereof, the through-hole 16a loosely, and the shaft 18 is provided, at the front end thereof, with an enlarged head section 22, thus forming a stud 32. At the middle of the lower face of the enlarged head section 22, a chip 24 made of ultra-hard alloy is fixed with the top section projected.

The back end of the enlarged cylinder section 12B of the cylinder 12 is opened, and the opening 13 is closed by a cover 13a. A spring 30 is provided between the cover 13a and the enlarged section 20 of the stud 32, biasing the stud 32 toward the opening edge 12a of the cylinder 12. A dent 20b is formed on the upper face of the enlarged section 20 and the lower end of the spring 30 is fitted in the dent 20b.

The spring 30 pushes the enlarged section 20 of the stud 32 into contact with the retaining section 16 of the cylinder 12 positioning usually the stud 32 with its axis coinciding with the axis of the cylinder 12. Since the contact faces 20c and 16b between the enlarged section 20 and the retaining section 16 are each formed so as to be perpendicular to the axis of the cylinder 12, the axis of the stud 32 may coincide with the axis of the cylinder 12. In this state, the enlarged head section 22 of the stud 32 projects outwardly over the opening edge 12a of the cylinder 12; that is, the length of the shaft 18, over the upper face of the retaining section 16 toward the front side, is designed to be longer than the large-diameter cylinder section 12A. Note that the jaw section 22a of the enlarged head section 22 is formed in a curved face and that the inner end edge of the opening edge 12a of the cylinder 12 also is formed in a curved face corresponding to the curved face of the jaw section 22a.

The enlarged section 20 is relatively thick, the side-wall section 20a, except the maximum-outer-diameter section, is slant inwardly, the longitudinal section is formed in an approximate trapezoid, and the diameter of the lower end section, i.e., the maximum-diameter portion, of the enlarged section 20 is slightly shorter than that of the inner diameter of the large-diameter cylinder section 12B and longer than the diameter of the through-hole 16a. Also, the diameter of the enlarged head section 22 of the stud 32 is slightly shorter than the diameter of the through-hole 16a and slightly longer than the inner diameter of the small-diameter cylinder section 12A of the cylinder 12.

Therefore, the stud 32 cannot get out of the cylinder 12 in the direction toward the front end by the provision of the enlarged section 20 and the retaining section 16, but can be withdrawn in the direction toward the back side of the cylinder 12 through the opening 13. When the stud 32 is pushed in along the axis against the force of the spring 30, the enlarged head section 22 is buried into the small-diameter cylinder section 12A.

The stud 32 is capable of slant movement in the cylinder 12, and during a slant movement the jaw section 22a of the enlarged head section 22 is caught by the opening edge 12a of the cylinder 12, so that the enlarged head section 22 cannot get buried into the small-diameter cylinder section 12A, keeping the cylinder in the projected state. Note that since only the lower face of the enlarged section 20 is the maximum-diameter section, the upper section being smaller in diameter, the upper circumferential face of the enlarged section 20 does not prevent the stud 32 from slant movement.

The assembly of the stud unit 10 is made by putting the stud 32 and then the spring 30 in from the opening 13 of the cylinder 12, then putting the cover 13a over the opening 13, and finally fixing the cover 13a on the back end of the cylinder 12 by means of welding, etc.

Stud units 10 are inserted into holes 17... bored on the tire 11 in such a condition that the cylinder 12 is completely buried and that normally the force of the spring 30 exerted on the stud 32 keeps the front end section of the enlarged head section 22 projected out of the tread face 11d of the tire 11. The stud units 10 thus buried are prevented by the flange section 14 and the step 12b on the outer circumferential face of the cylinder 12 from being withdrawn. The driving of a stud unit 10 into a hole 17 may be effected using the conventional spike pin setting device (not shown).

Note that, when the opening edge 12a of the cylinder 12 is formed thick, the stud unit 10 may be driven into the tire 11 by pushing the opening edge 12a, and that after driving, it serves to prevent withdrawal and slant movement of the cylinder 12.

Now, the operation of the stud unit will be described when a car is allowed to run which has been equipped with skid-proof tires having the above-described stud units buried.

First, constant-speed running will be dealt with by reference to FIGS. 1 and 5.

During a constant-speed running, according as the tire 11 rotates, the tips of the studs 32 of the stud units 10, together with the tread face 11d, sequentially come into touch with road surface.

The stud 32 brought into touch with the road supports the weight of the car and is pushed into the cylinder against the elasticity of the spring 30 (see FIG. 5). In this process, since the maximum-diameter section of the enlarged section 20 is guided in sliding contact with the inner wall face of the large-diameter cylinder section 12B, the stud 32 is pushed into the cylinder 12 without being shaken horizontally. The tip of the stud 32 is brought into contact with the road surface under the action of small elasticity of the spring 30, without causing any damage on the road surface.

As the tire 11 rotates to release the stud 32 from its contact with the road surface, the elasticity of the spring 30 allows the tip of the stud 32 to be projected over the tread face 11d.

The operation of the stud unit will now be described when the car is braked.

On a dry road surface, which has a high coefficient of friction, normal braking action allows the tread face 11d to grip the road surface, thus enabling the frictional force between the tread surface 11d and the road surface to serve as the braking force.

Even while, just after an application of braking, the tire 11 rotates to bring the next tread face 11d and stud 32 into contact with the road surface, an effective frictional force is first produced between the tread face 11d and the road surface so that almost no force in the horizontal direction is exerted on the stud 32. Thus, the stud 32 still goes completely into the cylinder without scraping the road surface.

Note that when a slight horizontal force is exerted on the stud 32 to cause its slant movement and the jaw section 22a of the enlarged head section 22 is going to be caught by the opening edge 12a of the cylinder 12, the stud 32 may completely enter the cylinder 12 since the horizontal force on the stud 32 itself is not so much because almost all the frictional force is produced on the tread face 11d and in addition the jaw section 22a and the opening edge 12a are in a curved form.

On the other hand, the tire 11 is easy to get into slipping on an icy or snowy road having a low coefficient of friction.

Upon an application of braking on an icy or snowy, the tread face 11d, of both the tread face 11d and the stud 32 next to come into contact with the road, will skid in the S direction in FIG. 1. But, since the stud 32 is easier to be caught by icy or snowy surface than the tread face 11d, the icy or snowy surface will exert an immediate and large horizontal force f on the stud 32. This results in a generation of braking force as a result of a sequence in which, as shown in FIG. 6, the stud 32 is first caused to move rapidly and slantly in the opposite direction of car advance, the jaw section 22a of the enlarged head section 22 is caught by the opening edge 22 of the cylinder 12, and the stud 32 goes into the icy or snowy road surface.

Note that, since the diameter of the maximum-diameter section of the enlarged section 20 is designed to be almost equal to the inner diameter of the large-diameter cylinder section 12B of the cylinder 12, the stud 32 may enter into a smooth slant movement with the maximum-diameter section of the enlarged section 20 as the fulcrum when a horizontal force is exerted on the stud 32.

The above description refers to the operation at the time of braking. The same is the case with the time of acceleration and of start on a slope, etc., as follows.

On a dry road surface, at the time of acceleration or start the tread face 11d still grips the road surface so fast that the stud 32 does not receive so great a horizontal force and is allowed to enter the cylinder 12 completely, thus causing no damage on the road surface.

Also at the time of acceleration or start on an icy or snowy road surface, the tire 11 is easy to slip. During this slip it is the tread face 11d that enters into the slip. In this step, a strong horizontal force which the driving force yields between the stud 32 and the icy or snowy road surface causes the stud 32 to move slantly in the direction of car advance, and the jaw section 22a is caught by the opening edge 12a of the cylinder 12, preventing the enlarged head section 22 from going into the cylinder 12, with a result that the slip of the tire 11 may be prevented with an effective driving force made available.

In the above embodiment, the enlarged section 20 of the stud 32 is made thick in the axial direction so that the enlarged section 20 may be prevented from deformation or damage. Moreover, the shaft 18 may be made large in diameter without making the cylinder large in diameter so that the shaft 18 may be prevented from being broken.

Note that the corner section between the jaw section 22a of the stud 32 and the enlarged head section 22 may be made curved. With this curved form, even an application of a weak horizontal force on the enlarged head section 22 allows the stud 32 to enter the cylinder 12. Also, even if sand, etc. ha ve entered the gap between the cylinder 12 of the stud unit 10 and the stud 32, since the tire 11 is rotating at a high speed, the sand, etc. may be removed immediately by the reciprocating movement of the stud 32 and the centrifugal force.

FIGS. 7, 8, 10, and 11 refer respectively to different embodiments for the stud unit 10.

The stud unit 10 shown in FIG. 7 is the same as the above embodiment except that the enlarged section 20 of the stud 32 is formed in a reversed trapezoid in section and that the maximum-diameter section of the stud 32 is made the upper edge section of the enlarged section 20.

In the stud unit 10 of FIG. 7, during constant-speed running, the enlarged section 20 is guided in the large-diameter section 12B and thus the stud 32 may go into and come out of the cylinder 12 without being shaken horizontally. On the other hand, at the time of braking when a horizontal force is exerted on the stud 32, the stud 32 enters into a smooth, slant movement with the above maximum-diameter section as the fulcrum (see FIG. 8).

In the embodiment of FIG. 9, the side-wall face of the enlarged section 20 is made arc-shaped in section and an intermediate section of the side-wall face is made the maximum-diameter section.

In the embodiment of FIG. 10, a flat dish-shaped cap 12 is provided on the enlarged section 20 and the lower section of the spring 30 is set in a cap 15. The cap 15 comprises a disk section 15a and a projecting section 15b.

In the embodiment of FIG. 11, the shaft 18 is formed in acone in which the diameter is reduced from the enlarged section 20 to the jaw section 22a of the enlarged head section 22. The connection base section of the shaft 18 with the enlarged section 20 is formed slightly smaller in diameter than the through-hole 16a of the retaining section 16, and the stud 32, in the state of projection, coincides with the cylinder 12 in axis. Also, the shaft 18 is increased in strength.

In addition, the lower section of the spring 30 is set in the dent 20b of the enlarged section 20 or the dish-shaped cap 15. With this structure, the stud 32 does not come off the upper face of the enlarged section 20 when moved slantly, and when the external force is released from the stud 32, the stud 32 may be pushed easily in the direction of projection and the enlarged section 20 is pushed into contact with the retaining section 16 with resulting coincidence with the axis of the cylinder 12.

In the above embodiment, the large-diameter cylinder section 12B of the cylinder 12 is formed different, in outer diameter, from the small-diameter cylinder section 12A, but it may be adopted that their outer diameters be made the same in size, with their inner diameters either different from or the same with each other.

For each of the above embodiments, the projected section may be formed in one body in place of the chip 24. Also, the cylinder or stud of the stud unit may be made of ceramics, synthetic resin, etc.

### THE EFFECT OF THE INVENTION

The present invention is embodied as described above and gives the following remarkable effect.

When a car, equipped with the skid-proof tires of the present invention, is subjected to a braking on a dry road surface, the tread sections of each tire grip the road surface and no large force in the swinging direction is exerted on the studs in contact with the road, so that the stud is pushed into the cylinder with the maximum-diameter section of the side-wall face of the stud enlarged section in sliding contact with the inner-wall face of the cylinder, without causing any damage on the road surface.

On the other hand, when a car is braked on an icy or snowy road, the tread sections of the tire slip and a force in the horizontal direction is exerted on the enlarged head section at the front end of the stud. Then, the opening edge of the cylinder and the jaw section of the stud are brought into engagement with each other, with the enlarged head section of the stud maintained in the projected state and biting the icy or snowy road surface to immediate prevention of slip. In addition, since only the maximum-diameter section of the enlarged section of the stud is in sliding contact with the inner-wall face, no hindrance is caused on the slant movement of the stud.

Further, since the enlarged section at the back end of the stud is designed to be pushed by a spring, the shaft connecting the enlarged head section and the enlarged section maybe made large in diameter, with resulting increase in strength.

## Claims

1. A stud unit (10) comprising:
a cylinder (12) having an open front end, a rear end closed with a lid (13), a flange section (14) on the outer circumferential face of the rear end and a retaining section (16) which has an axial through-hole (16a) on the mid inner face thereof;
a stud (32) inclinably located in the cylinder (12) and having a shaft (18) which is accommodated in the through-hole (16a) with play, the shaft (18) having an enlarged rear section (20) for engaging the retaining section (16) so as to prevent release of the stud through the front end of the cylinder (12), the shaft (18) also having an enlarged head section (22) which is of smaller diameter than the open front end of the cylinder (12) so that the enlarged head section (22) is capable of projecting therefrom, and having a jaw section (22a) capable of engaging the open front end of the cylinder (12) when the stud inclines with respect to the axis of the cylinder (12); and
a spring (30) located between the lid (13) at the rear end of the cylinder (12) and the enlarged rear section (20) of the stud (18) so as to bias the enlarged rear section (20) of the stud (18) toward the retaining section (16) of the cylinder;
characterized in that
the maximum outer diameter of the enlarged rear section (20) of the stud is almost the same as the inner diameter of the cylinder (18) and the side-wall section of the enlarged rear section (20) except the maximum outer diamter section has an inclined face.

2. A stud unit according to claim 1, wherein the sectional shape of the enlarged rear section (20) of the shaft (18) is a trapezoid.

3. A stud unit according to claim 1, wherein the sectional shape of the enlarged rear section (20) of the shaft (18) is a reverse trapezoid.

4. A stud unit according to claim 1, wherein the sectional edge of the side-wall in the enlarged rear section (20) is arcuate.

5. A stud unit according to any preceding claim, wherein contact faces of the enlarged rear section (20) and the retaining section (16) are perpendicular to the axial direction of the cylinder.

6. A stud unit according to any preceding claim wherein the outer diameter of the enlarged head section (22) is smaller than the inner diameter of the through-hole (16a) of the retaining section (16).

7. A stud unit according to claim 6, wherein the diameter of the enlarged head section (22) of the shaft (18) is slightly smaller than the diameter of the through-hole (16a) and wherein the diameter of the shaft (18) reduces toward the jaw section (22a).

8. A skid-proof tyre provided with stud units as claimed in any one of claims 1 to 7.

## Patentansprüche

1. Stifteinheit (10) mit:
einem Zylinder (12) mit einem offenen vorderen Ende, einem mit einem Deckel (13) geschlossenen hinteren Ende, einem Flanschabschnitt (14) auf der äußeren Umfangsfläche des hinteren Endes und einem zurückhaltenden Abschnitt (16), der ein axiales Durchgangsloch (16a) in seiner mittleren inneren Fläche aufweist;
einem neigbar in dem Zylinder (12) angeordneten Stift (32) mit einem Schaft (18), der in dem Durchgangsloch (16a) mit Spiel aufgenommen ist, wobei der Schaft (18) einen vergrößerten hinteren Abschnitt (20) zum Angreifen an den zurückhaltenden Abschnitt (16) so aufweist, daß der Stift daran gehindert ist, durch das vordere Ende des Zylinders (12) freizukommen, der Schaft (18) auch einen vergrößerten Kopfabschnitt (22) aufweist, der von einem kleineren Durchmesser als das vordere offene Ende des Zylinders (12) so gebildet ist, daß der vergrößerte Kopfabschnitt (22) daraus hervorstehen kann, und einen Klauenabschnitt (22a) aufweist, der an dem vorderen offenen Ende des Zylinders (12) angreifen kann, wenn sich der Stift in Bezug auf die Achse des Zylinders (12) neigt; und
einer zwischen dem Deckel (13) an dem hinteren Ende des Zylinders (12) und dem vergrößerten hinteren Abschnitt (20) des Stiftes (18) so angeordneten Feder (30), daß sie den vergrößerten hinteren Abschnitt (20) des Stiftes (18) zu dem zurückhaltenden Abschnitt (16) des Zylinders vorspannt;
dadurch gekennzeichnet,
daß der maximale äußere Durchmesser des vergrößerten hinteren Abschnittes (20) des Stiftes ziemlich der gleiche wie der innere Durchmesser des Zylinders ist und
daß der Seitenrandabschnitt des vergrößerten hinteren Abschnittes (20) mit der Ausnahme des maximalen äußeren Durchmesserabschnittes eine geneigte Fläche aufweist.

2. Stifteinheit nach Anspruch 1, bei der die Schnittform des vergrößerten hinteren Abschnittes (20) des Schaftes (18) eine Trapezform ist.

3. Stifteinheit nach Anspruch 1, bei der die Schnittform des vergrößerten hinteren Abschnittes (20) des Schaftes (18) eine umgekehrte Trapezform ist.

4. Stifteinheit nach Anspruch 1, bei der die Schnittkante der Seitenwand in dem vergrößerten hinteren Abschnitt (20) bogenförmig ist.

5. Stifteinheit nach einem der vorhergehenden Ansprüche, bei der Kontaktflächen des vergrößerten hinteren Abschnittes (20) und des zurückhaltenden Abschnittes (16) senkrecht zu der axialen Richtung des Zylinders stehen.

6. Stifteinheit nach einem der vorhergehenden Ansprüche, bei der der äußere Durchmesser des vergrößerten Kopfabschnittes (22) kleiner als der innere Durchmesser des Durchgangsloches (16a) des zurückhaltenden Abschnittes (16) ist.

7. Stifteinheit nach Anspruch 6, bei der der Durchmesser des vergrößerten Kopfabschnittes (22) des Schaftes (18) ein wenig kleiner als der Durchmesser des Durchgangsloches (16a) ist und bei der der Durchmesser des Schaftes (18) sich zu dem Klauenabschnitt (22a) verringert.

8. Rutschfester Reifen, der mit Stifteinheiten versehen ist, wie sie in einem der Ansprüche 1 bis 7 beansprucht sind.

## Revendications

1. Ensemble à clou (10) (10) comportant :
un cylindre (12) ayant une extrémité avant ouverte, une extrémité arrière fermée par un couvercle (13), une partie en flasque (14) sur la face circonférencielle extérieure de l'extrémité arrière, et une partie de maintien (16) qui a un trou traversant axial (16a) sur la face intérieure médiane de celle-ci ;
un clou (32) disposé de façon inclinable dans le cylindre (12) et possédant un arbre (18) qui est disposé dans le trou traversant (16a) avec un certain jeu, l'arbre (18) ayant une partie arrière agrandie (20) pour venir en contact avec la partie de maintien (16) de façon à empêcher la libération du clou par l'extrémité avant du cylindre (12), l'arbre (18) possédant également une partie de tête agrandie (22) qui a un diamètre plus petit que l'extrémité avant ouverte du cylindre (12), de telle sorte que la partie de tête agrandie (22) soit susceptible de faire saillie hors de celle-ci, et possédant une partie de mâchoire (22a) susceptible de venir en contact avec l'extrémité avant ouverte du cylindre (12) lorsque le clou s'incline par rapport à l'axe du cylindre (12) ; et
un ressort (30) disposé entre le couvercle (13) à l'extrémité arrière du cylindre (12) et la partie arrière agrandie (20) du clou (18) de façon à rappeler la partie arrière agrandie (20) du clou (18) vers la partie de maintien (16) du cylindre ;
caractérisé en ce que
le diamètre extérieur maximal de la partie arrière agrandie (20) du clou est presque le même que le diamètre intérieur du cylindre (18) et en ce que la partie de paroi latérale de la partie arrière agrandie (20), à l'exception de la partie de diamètre extérieur maximal, a une face inclinée.

2. Ensemble à clou selon la revendication 1, dans lequel la forme de la section de la partie arrière agrandie (20) de l'arbre (18) est une forme trapézoïdale.

3. Ensemble à clou selon la revendication 1, dans lequel la forme de la section de la partie arrière agrandie (20) de l'arbre (18) est celle d'un trapèze inversé.

4. Ensemble à clou selon la revendication 1, dans lequel le bord de la section de la paroi latérale dans la partie arrière agrandie (20) est en forme d'arc.

5. Ensemble à clou selon l'une quelconque des revendications précédentes, dans lequel les faces de contact de la partie arrière agrandie (20) et de la partie de maintien (16) sont perpendiculaire à la direction axiale du cylindre.

6. Ensemble à clou selon l'une quelconque des revendications précédentes, dans lequel le diamètre extérieur de la partie de tête agrandie (22) est inférieur au diamètre intérieur du trou traversant (16a) de la partie de maintien (16).

7. Ensemble à clou selon la revendication 6, dans lequel le diamètre de la partie de tête agrandie (22) de l'arbre (18) est légèrement inférieur au diamètre du trou traversant (16a) et dans lequel le diamètre de l'arbre (18) se réduit en direction de la partie de mâchoire (22a).

8. Pneumatique antidérapant muni d'ensembles à clou selon l'une quelconque des revendications 1 à 7.
